# EUROPÄISCHE PATENTSCHRIFT

(11) **EP 3 374 648 B1**
(45) Veröffentlichungstag und Bekanntmachung des Hinweises auf die Patenterteilung: **01.06.2022**
(21) Anmeldenummer: 16797738.8
(22) Anmeldetag: 28.10.2016
(51) Int. Cl.: F16B 7/18, F16B 37/04

(54) **VERBINDUNGSBAUGRUPPE FÜR MONTAGESCHIENEN**
CONNECTION ASSEMBLY FOR MOUNTING RAILS
ENSEMBLE DE LIAISON POUR RAILS DE MONTAGE

(30) Priorität: 12.11.2015 DE 102015119506
(43) Veröffentlichungstag der Anmeldung: 19.09.2018
(73) Patentinhaber: fischerwerke GmbH & Co. KG, 72178 Waldachtal (DE)
(72) Erfinder: LINKA, Martin, 72160 Horb a.N. (DE); FÖRMER, Thomas, 72160 Horb a.N. (DE)
(86) Internationale Anmeldenummer: PCT/EP2016/001800
(87) Internationale Veröffentlichungsnummer: WO 2017/080634

(56) Entgegenhaltungen:
- EP-A1- 2 980 425
- EP-A2- 1 039 155
- GB-A- 2 434 423

## Beschreibung

Die Erfindung betrifft eine Verbindungsbaugruppe zum Verbinden zweier Montageschienen mit den Merkmalen des Oberbegriffs des Anspruchs 1. Die Verbindungsbaugruppe kann auch zur Befestigung der Montageschiene an etwas anderem als einer zweiten Montageschiene oder zur Befestigung eines an sich beliebigen Gegenstands an der Montageschiene verwendet werden.

Montageschienen sind üblicherweise Vierkantrohre mit einem quadratischen oder rechteckigen Querschnitt und einem in Längsrichtung verlaufenden Schlitz. Sie werden beispielsweise an Wänden oder einer Decke, auch abgehängt unter einer Decke, angebracht und dienen zur Befestigung von beispielsweise Kabel- oder Rohrschellen, Kabelpritschen und dgl.

Zu einer Befestigung an einer Montageschiene werden oft Hammerkopfschrauben oder rechteckige Muttern als Riegel verwendet, die durch den Schlitz in die Montageschiene einbringbar und durch Drehung in der Montageschiene schräg- oder quergestellt und dadurch in der Montageschiene in Hintergriff gebracht werden können, um einen Gegenstand an der Hammerkopfschraube oder der Rechteckmutter anzuschrauben und über die Hammerkopfschraube oder die Rechteckmutter an der Montageschiene zu befestigen.

Das Patent EP 1 462 665 B1 offenbart eine Verbindungsbaugruppe zum Verbinden zweier Montageschienen mit einer länglichen Mutter und einer Schraube, die durch ein Loch in einem leistenförmigen Verbinder in die Mutter geschraubt ist. Eine Schraubenfeder zwischen dem Verbinder und einem Schraubenkopf drückt den Schraubenkopf vom Verbinder ab und damit die längliche Mutter auf einer gegenüberliegenden Seite gegen den Verbinder. An beiden Enden der Mutter weist der Verbinder Erhebungen auf, zwischen denen die Mutter einliegt und durch Formschluss gegen Drehen gehalten ist. Zur Befestigung an einer Montageschiene wird der Verbinder auf die den Schlitz aufweisende Seite der Montageschiene aufgesetzt, so dass die längliche Mutter in den Schlitz der Montageschiene gelangt. Anschließend wird der Schraubenkopf gegen eine Federkraft der Schraubendruckfeder zum Verbinder gedrückt, wodurch auf der gegenüberliegenden Seite die längliche Mutter vom Verbinder abgedrückt und durch den Schlitz der Montageschiene in die Montageschiene hinein bewegt wird. Durch Drehen des Schraubenkopfs lässt sich die Mutter in der Montageschiene drehen, so dass die Mutter in der Montageschiene schräg- oder quersteht und die Montageschiene auf einer Innenseite seitlich des Schlitzes hintergreift. Der leistenförmige Verbinder ist dadurch mit der Montageschiene verbunden und wird durch Festziehen der Schraube von außen gegen die Montageschiene gespannt.

Eine weitere gattungsgemäße Verbindungsbaugruppe ist aus der Patentanmeldung GB 2 434 423 A bekannt. Beschrieben ist eine Verbindungsbaugruppe zum Verbinden einer abgewinkelten Konsole mit einer Montageschiene. Ein Steg mit einem Innengewinde hintergreift hierzu die Lippen der Montageschiene. Durch eine nicht-kreisrunde Öffnung in der abgewinkelten Konsole ist eine Schraube in das Innengewinde des Stegs geschraubt. Hierdurch wird der Steg gegen die Lippen und die Konsole gegen die Öffnung der Montageschiene verspannt. Ein Verbindungselement, welches zwei Stifte aufweist, sorgt in Verbindung mit der nicht-kreisrunden Öffnung in der Konsole dafür, dass der Steg nur bestimmte vordefinierte Positionen bezüglich der Konsole einnehmen kann.

Aufgabe der Erfindung ist eine alternative Verbindungsbaugruppe, die sich einfach an einer Montageschiene befestigen lässt.

Diese Aufgabe wird durch die Merkmale des Anspruchs 1 gelöst. Die erfindungsgemäße Verbindungsbaugruppe weist einen Riegel auf, dessen Länge größer als seine Breite ist. Insbesondere ist der Riegel länger, aber nicht breiter als ein Schlitz oder eine Öffnung einer Montageschiene, an der die Verbindungsbaugruppe befestigt werden soll, weit ist. Längs zum Schlitz bzw. der Öffnung ausgerichtet lässt sich der Riegel in die Montageschiene einbringen und durch Drehen in der Montageschiene quer- oder schrägstellen und dadurch in Hintergriff auf beiden Seiten des Schlitzes in der Montageschiene bringen.

Außerdem weist die erfindungsgemäße Verbindungsbaugruppe einen Verbinder auf, der außen auf die den Schlitz bzw. die Öffnung aufweisende Seite der Montageschiene aufsetzbar ist.

Des Weiteren weist die erfindungsgemäße Verbindungsbaugruppe einen Halter auf, der den Riegel und den Verbinder verbindet und der mit dem Riegel drehfest verbunden ist. Zusammen mit dem Halter ist der Riegel gegenüber dem Verbinder drehbar.

Der Halter durchgreift ein nicht-kreisförmiges Loch des Verbinders und weist ein Drehsicherungselement auf, das durch Formschluss in dem Loch des Verbinders den Halter in einer vorgesehenen Winkelstellung zum Verbinder hält. Das nicht-kreisrunde Loch kann beispielsweise elliptisch, oval, mehreckig sein und allgemein grundsätzlich jede nicht-kreisrunde Form aufweisen, die eine Drehfestigkeit des Halters in dem Loch durch Formschluss ermöglicht. Das Drehsicherungselement des Halters ist komplementär zu der nicht-kreisrunden Form des Lochs im Verbinder. Das Drehsicherungselement ist so geformt und angeordnet, dass es den Halter in der vorgesehenen Winkelstellung zum Verbinder hält. Es muss aber nicht deckungsgleich mit dem Loch im Verbinder sein. Auf diese Weise lässt sich der mit dem Halter drehfeste Riegel mit dem Verbinder in Bezug auf die Montageschiene ausrichten. Durch eine Bewegung des Halters senkrecht zum Verbinder lässt sich das Drehsicherungselement des Halters außer Eingriff von dem nicht-kreisrunden Loch des Verbinders bringen und anschließend der Halter mit dem Riegel gegenüber dem Verbinder drehen. Mit "senkrecht" ist hier eine Richtung gemeint, die parallel oder identisch mit der Längsachse des Lochs des Verbinders ist, wobei die Bewegung insbesondere von der nach der Montage der Montageschiene abgewandten Rückseite des Verbinders zu der der Montageschiene zugewandten Vorderseite des Verbinders erfolgt.

Kennzeichnend für die Erfindung ist, dass ein Widerlager am Halter vorgesehen ist, das sich am Verbinder abstützt und das Drehsicherungselement in drehfestem Eingriff in dem nicht-kreisförmigen Loch des Verbinders hält. Die Abstützung am Verbinder lässt sich lösen, so dass sich das Drehsicherungselement außer Eingriff von dem nicht-kreisförmigen Loch des Verbinders bringen und der Halter zusammen mit dem Riegel gegenüber dem Verbinder drehen lässt.

Zur Befestigung der erfindungsgemäßen Verbindungsbaugruppe an einer Montageschiene wird der Verbinder von außen auf die Seite der Montageschiene aufgesetzt, die einen Schlitz oder eine Öffnung aufweist. Dabei wird der Verbinder so ausgerichtet, dass der Riegel in Längsrichtung des Schlitzes bzw. der Öffnung der Montageschiene ausgerichtet ist, so dass beim Aufsetzen des Verbinders von außen auf die Montageschiene der Riegel in den Schlitz bzw. die Öffnung in der Montageschiene eintritt oder durch den Schlitz in die Montageschiene gelangt. Anschließend wird durch eine Bewegung des Halters senkrecht zum Verbinder das Drehsicherungselement des Halters außer Eingriff von dem nicht-kreisrunden Loch des Verbinders gebracht, so dass sich der Halter zusammen mit dem Riegel drehen lässt. Durch das Drehen des Halters wird der Riegel in der Montageschiene quer- oder schräggestellt, so dass der Riegel die Montageschiene auf einer Innenseite beiderseits des Schlitzes hintergreift. In dieser Hintergriffstellung hält der Riegel die Verbindungsbaugruppe an der Montageschiene.

Der Verbinder ist zum Verbinden der Montageschiene mit einer anderen Montageschiene, zum Befestigen der Montageschiene an etwas anderem oder zum Befestigen eines Gegenstands an der Montageschiene vorgesehen. Allgemein soll unter "Verbinder" ein Bauteil der Verbindungsbaugruppe verstanden werden, das von außen auf die den Schlitz bzw. die Öffnung aufweisende Seite der Montageschiene aufsetzbar ist und das nicht-kreisförmige Loch für die drehfeste Halterung des Halters aufweist, unabhängig von einer Verbindungsfunktion.

Vorzugsweise wird das Drehsicherungselement des Halters durch eine Bewegung des Halters senkrecht zum Verbinder außer Eingriff von dem nicht-kreisrunden Loch des Verbinders gebracht. Dabei entfernt sich der Riegel vom Verbinder, d.h. der Abstand zwischen dem Verbinder und dem Riegel wird größer. Sofern der Riegel beim Aufsetzen des Verbinders auf die Montageschiene nicht vollständig in die Montageschiene gelangt, sondern sich noch zumindest teilweise in dem Schlitz bzw. der Öffnung der Montageschiene befindet, bringt die Bewegung des Halters senkrecht zum Verbinder, die den Riegel vom Verbinder entfernt, den Riegel vollständig in die Montageschiene hinein, so dass der Riegel ungehindert vom Schlitz in der Montageschiene gedreht werden kann.

Eine Ausgestaltung der Erfindung sieht vor, dass der Verbinder ein Formschlusselement aufweist, das den auf die Montageschiene aufgesetzten Verbinder durch Anlage an der Montageschiene in einer vorgesehenen Winkelstellung zur Montageschiene hält. In der vorgesehenen Winkelstellung des Verbinders zur Montageschiene ist der Riegel der Verbindungsbaugruppe längs zum Schlitz bzw. zur Öffnung der Montageschiene ausgerichtet, wenn sich das Drehsicherungselement des Halters in dem nicht-kreisrunden Loch im Verbinder befindet. Beim Aufsetzen des Verbinders von außen auf die Montageschiene richtet das Formschlusselement den Verbinder so aus, dass der Riegel längs zum Schlitz ausgerichtet ist, so dass er in den Schlitz ein- oder durchtreten kann.

Eine Weiterbildung der Erfindung sieht vor, dass das Widerlager seitlich vom Halter absteht und in seitlicher Richtung des Halters federt. Mit "seitlich" ist hier quer, insbesondere radial zur senkrechten Richtung gemeint. In ausgefedertem Zustand übergreift das Widerlager des Halters einen Lochrand des nicht-kreisrunden Lochs im Verbinder auf einer dem Riegel abgewandten Seite. Durch Druck gegen den Halter federt das Widerlager radial nach innen, so dass sich die Abstützung am Verbinder löst und der Halter sich senkrecht zum Verbinder bewegt. Das Drehsicherungselement gelangt dabei außer Eingriff von dem nicht-kreisförmigen Loch des Verbinders und der Halter kann zusammen mit dem Riegel gedreht werden, um den Riegel in Hintergriff in der Montageschiene zu bringen.

Eine Ausgestaltung der Erfindung sieht vor, dass der Riegel ein Gewindeloch und der Halter einen Durchlass für ein Schraubelement aufweist, das in das Gewindeloch im Riegel schraubbar ist. Der Durchlass kann ein Loch, eine Nut, eine Aussparung, ein Freiraum oder dgl. sein, durch den das Schraubelement durch den Halter hindurch in das Gewindeloch im Riegel schraubbar ist. Das Schraubelement ist beispielsweise eine Schraube oder ein Gewindebolzen, an dem ein Gegenstand befestigbar und über den und den Riegel der erfindungsgemäßen Verbindungsbaugruppe der Gegenstand an einer Montageschiene befestigbar ist.

Eine Ausgestaltung der Erfindung sieht ein Federelement am Halter vor, das den Riegel in Richtung des Verbinders beaufschlagt. Steht der Riegel in der Montageschiene in Hintergriff, beaufschlagt das Federelement den Riegel beiderseits des Schlitzes bzw. der Öffnung von innen gegen die Ränder des Schlitzes bzw. der Öffnung der Montageschiene. Das verursacht eine Reibung der Verbindungsbaugruppe an der Montageschiene, die die Verbindungsbaugruppe gegen unbeabsichtigte Verschiebung entlang der Montageschiene hält. Zum Positionieren der Verbindungsbaugruppe lässt sich die Reibung von Hand überwinden und die Verbindungsbaugruppe entlang der Montageschiene verschieben. Auch bei senkrecht montierter Montageschiene hält die von dem Federelement des Halters verursachte Reibung die Verbindungsbaugruppe gegen eine Verschiebung durch Schwerkraft. Eine unverschiebliche Festlegung der Verbindungsbaugruppe an der Montageschiene erfolgt beispielsweise durch Festziehen eines Schraubelements, das in beispielsweise ein Gewindeloch des Riegels geschraubt ist.

Die Erfindung wird nachfolgend anhand eines in der Zeichnung dargestellten Ausführungsbeispiels näher erläutert. Die beiden Figuren zeigen eine erfindungsgemäße Verbindungsbaugruppe in perspektivischer Darstellung mit verschiedenen Blickrichtungen.

Die in der Zeichnung dargestellte, erfindungsgemäße Verbindungsbaugruppe 1 weist einen Riegel 2, einen Halter 3 und einen Verbinder 4 auf. Des Weiteren weist sie eine Lochscheibe 5 und eine Schraube 6 auf, die keine zwingenden Bauteile, allerdings vorzugsweise vorhanden sind. Im Ausführungsbeispiel ist der Riegel 2 eine quaderförmige Rechteckmutter mit einem in der Zeichnung nicht sichtbaren Gewindeloch in ihrer Mitte. Allgemein ist der Riegel 2 ein Bauteil, das länger als breit ist.

Der Halter 3 ist ein Hohlkörper mit einer zylindrischen Mantelfläche, das einen Flansch mit zwei einander gegenüberliegenden Haltebacken 7 an einem Stirnende aufweist. Die Haltebacken 7 halten die Lochscheibe 5 zwischen sich. Die Lochscheibe 5 überdeckt den Flansch des Halters 3, der deswegen in der Zeichnung nicht sichtbar ist. An einem gegenüberliegenden Ende mit Abstand von der Lochscheibe 5 weist der Halter 3 einen ihn quer durchsetzenden Durchbruch mit einem rechteckigen Querschnitt auf, in dem der Riegel 2 aufgenommen ist. Der Durchbruch des Halters 3 ist so breit wie der Riegel 2 und in axialer Richtung des Halters 3 höher als der Riegel 2 dick ist. Auf einer der Lochscheibe 5 abgewandten Seite des Riegels 2 weist der Halter 3 zwei in Umfangsrichtung verlaufende Federelemente 8 auf, die den Riegel 2 in Richtung der Lochscheibe 5 beaufschlagen. Des Weiteren weist der Halter 3 einen axialen Durchlass auf, durch den die Schraube 6 in das Gewindeloch des Riegels 2 geschraubt ist. Die Schraube 6 ist durch die Lochscheibe 5 gesteckt, ein Schraubenkopf 9 befindet sich auf einer dem Riegel 2 abgewandten Seite der Lochscheibe 5.

Die Lochscheibe 5 ist sechseckig und liegt mit zwei gegenüberliegenden Seiten zwischen den Haltebacken 7 des Halters 3 ein.

Im dargestellten und beschriebenen Ausführungsbeispiel der Erfindung ist der Verbinder 4 ein Winkelblech 10 mit zwei in einem Winkel von 90° zueinander angeordneten Schenkeln 11. Der Verbinder 4 kann einen anderen Winkel als 90° aufweisen oder gerade sein. In jedem Schenkel 11 weist der Verbinder 4 ein Loch 12 auf, das nichtkreisrund ist. Im Ausführungsbeispiel weist das Loch 12 eine kreisförmige Grundform auf, das an zwei gegenüberliegenden Stellen mit tangentialen Rändern 13 nach außen über die Kreisform aufgeweitet ist. Von den tangentialen Rändern 13 führen kurze Ränder 14 rechtwinklig zu den tangentialen Rändern 13 nach innen zurück zu dem Kreis.

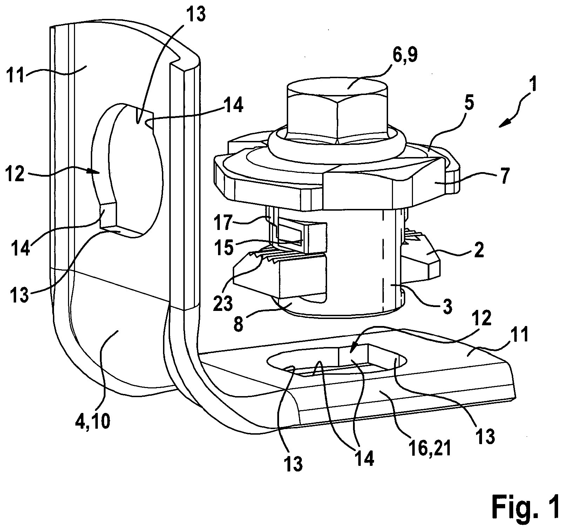

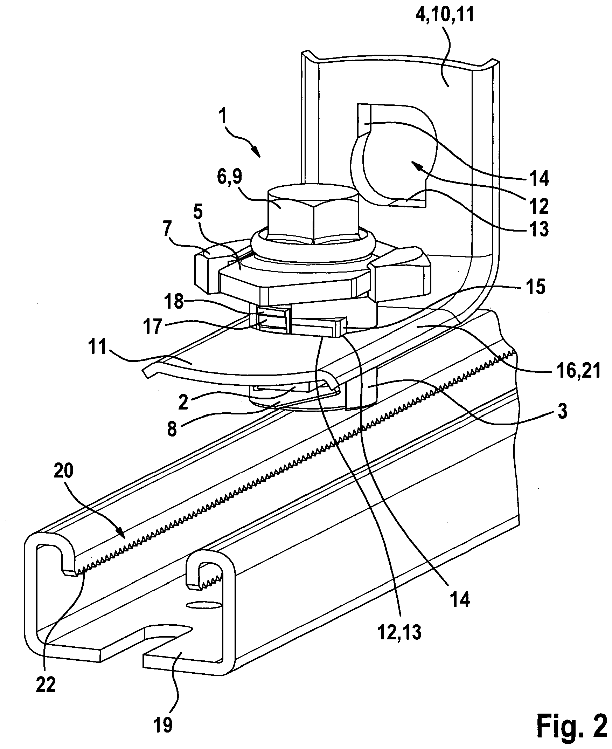

Wie in Figur 2 zu sehen, geht der Halter 3 bei zusammengesetzter Verbindungsbaugruppe 1 durch das Loch 12 im Verbinder 4 hindurch, so dass sich die Lochscheibe 5, die Haltebacken 7 und der von der Lochscheibe 5 verdeckte Flansch des Halters 3 auf einer Seite und der Riegel 2 auf einer gegenüberliegenden Seite des Verbinders 11 befinden. Zum Zusammenbau wird der Halter 3 ohne den Riegel 2 durch das Loch 12 des Verbinders 4 gesteckt, der Riegel 2 wird danach durch den den Halter 3 quer durchsetzenden, rechteckigen Durchbruch gesteckt und die Schraube 6 danach durch die Lochscheibe 5 und den axialen Durchlass des hohlen Halters 3 gesteckt und lose in das Gewindeloch des Riegels 2 geschraubt.

Die Form des Lochs 12 erinnert an ein Kreissägeblatt mit zwei gegenüberliegenden Sägezähnen. An einer der Lochscheibe 5 zugewandten Seite des Riegels 2 und mit Abstand von der Lochscheibe 5 weist der Halter 3 zwei einander gegenüberliegend angeordnete Vorsprünge auf, deren Form kongruent zu den Aufweitungen des Lochs 12 sind, die von den tangentialen Rändern 13 und den kurzen Rändern 14 begrenzt sind. Die Vorsprünge, die hier als Drehsicherungselemente 15 bezeichnet werden, liegen in den Aufweitungen des Lochs 12 ein und halten den Halter 3 durch Formschluss im Loch 12 drehfest im Verbinder 4. Der Riegel 2 ist dabei parallel zu Längsrändern 16 des Verbinders 4 ausgerichtet. Grundsätzlich kann das Loch 12 jede beliebige, nicht kreisrunde Form aufweisen, die eine durch Formschluss drehfeste Aufnahme des Halters 3 in einer vorgesehenen Winkelstellung zum Verbinder 4 hält. Beispiele möglicher Lochformen sind Ellipsen, Ovale, Mehrkante, Stern-, Ein- oder Vielnutprofile. Die Aufzählung ist nicht abschließend, sondern beispielhaft.

Des Weiteren weist der Halter 3 zwei einander gegenüberliegende Widerlager 17 auf. Im Ausführungsbeispiel sind die Widerlager 17 Federzungen, die radial nach innen und nach außen federn und eine Stufe 18 an freien Enden aufweisen, die sich auf der dem Riegel 2 abgewandten Seite des Verbinders 4 abstützen. Die Widerlager 17 halten die Lochscheibe 5 in Abstand von dem Verbinder 4 und die Drehsicherungselemente 15 in den korrespondierenden Aufweitungen des Lochs 12, so dass der Halter 3 drehfest in seiner vorgesehenen Winkellage im Verbinder 4 gehalten ist. Durch Druck gegen den Schraubenkopf 9 lässt sich der Halter 3 senkrecht zum Verbinder 4 weiter in das Loch 12 hinein bewegen, so dass die Lochscheibe 5 auf dem Verbinder 4 aufsitzt und sich der Riegel 2 vom Verbinder 4 entfernt. Dabei federn die Widerlager 17 radial nach innen und die Drehsicherungselemente 15 treten auf der dem Riegel 2 zugewandten Seite aus dem Loch 12 aus, so dass der Formschluss aufgehoben und der Halter 3 zusammen mit dem Riegel 2 gegenüber dem Verbinder 4 drehbar ist.

Die Verbindungsbaugruppe 1 ist zur Verbindung zweier Montageschienen 19 oder auch zur Befestigung eines Gegenstands an einer solchen Montageschiene 19 vorgesehen. Die Montageschiene 19 ist eine Profilstange mit einem rechteckigen, auf einer Seite offenen Rohrquerschnitt, die einen in Längsrichtung durchgehenden Schlitz 20 aufweist. Zur Befestigung der Verbindungsbaugruppe 1 an der Montageschiene 19 wird der Verbinder 4 von außen auf die Seite der Montageschiene 19 aufgesetzt, die den Schlitz 20 aufweist. Der Riegel 2 ist schmaler und länger als der Schlitz 20 der Montageschiene 19 weit ist. Der Riegel 2 und ein Teil des Halters 3, der sich auf der dem Riegel 2 zugewandten Seite des Verbinders 4 befindet, treten beim Aufsetzen des Verbinders 4 auf die Montageschiene 19 in den Schlitz 20 bzw. durch den Schlitz 20 durch in die Montageschiene 19 ein. Die Längsränder 16 des Verbinders 4 sind abgewinkelt und übergreifen die Montageschiene 19 seitlich. Die abgewinkelten Längsränder 16 bilden Formschlusselemente 21 des Verbinders 4, die durch ihre Anlage seitlich außen an der Montageschiene 19, wenn der Verbinder 4 auf die Montageschiene 19 aufgesetzt ist, den Verbinder 4 in eine vorgesehene Winkelstellung an der Montageschiene 19 halten. In dieser vorgesehenen Winkelstellung und der vorgesehenen Winkelstellung, in der die Drehsicherungselemente 15 den Halter 3 im Loch 12 des Verbinders 4 halten, ist der Riegel 2 längs zur Montageschiene 19 und zu ihrem Schlitz 20 ausgerichtet, so dass er in den Schlitz 20 ein- und durchtreten kann. Anschließend wird der Schraubenkopf 9 in Richtung des Verbinders 4 gedrückt, so dass die Lochscheibe 5 auf dem Verbinder 4 aufsitzt. Dabei bewegt sich der Halter 3 senkrecht zum Verbinder 4 und der Riegel 2 entfernt sich vom Verbinder 4, wodurch der Riegel 2 sich so weit in die Montageschiene 19 hineinbewegt, dass der Riegel 2 in der Montageschiene 19 durch Drehen quer- oder schräggestellt werden kann, so dass der Riegel 2 die Montageschiene 19 seitlich des Schlitzes 20 von innen hintergreift. Durch die Bewegung des Halters 3 quer zum Verbinder 4 treten die Drehsicherungselemente 15 aus dem nicht-kreisrunden Loch 12 aus, so dass der Halter 3 drehbar ist. Die Federelemente 8 beaufschlagen den in der Montageschiene 19 quer- oder schrägstehenden Riegel 2 von innen gegen die Ränder des Schlitzes 20, so dass die Verbindungsbaugruppe 1 klemmend an der Montageschiene 19 gehalten ist und sich nicht von selbst verschiebt. Zusätzlich weist die Montageschiene 19 innen an Seiten des Schlitzes 20 Verzahnungen 22 auf, die mit Verzahnungen 23 des Riegels 2 zusammenwirken und die Verbindungsbaugruppe 1 gegen Verschieben entlang der Montageschiene 19 sichern. Von Hand lässt sich die Verbindungsbaugruppe 1 zum Positionieren entlang der Montageschiene 19 verschieben, evtl. muss der Schraubenkopf 9 dazu etwas in Richtung des Verbinders 4 und der Montageschiene 19 gedrückt werden. Festgelegt wird die Verbindungsbaugruppe 1 durch Festziehen der Schraube 6, wodurch die Montageschiene 19 zwischen dem Riegel 2 und dem Verbinder 4 festgespannt wird.

### Verbindungsbaugruppe für Montageschienen

- 1: Verbindungsbaugruppe
- 2: Riegel
- 3: Halter
- 4: Verbinder
- 5: Lochscheibe
- 6: Schraube
- 7: Haltebacke
- 8: Federelement
- 9: Schraubenkopf
- 10: Winkelblech
- 11: Schenkel
- 12: Loch
- 13: tangentialer Rand
- 14: kurzer Rand
- 15: Drehsicherungselement
- 16: Längsrand
- 17: Widerlager
- 18: Stufe
- 19: Montageschiene
- 20: Schlitz
- 21: Formschlusselement
- 22: Verzahnung des Schlitzes 20
- 23: Verzahnung des Riegels 2

## Patentansprüche

1. Verbindungsbaugruppe zum Verbinden zweier Montageschienen (19), mit einem Riegel (2), dessen Länge größer als seine Breite ist, mit einem Verbinder (4), der auf die Montageschiene (19) aufsetzbar ist, und mit einem Halter (3), der den Riegel (2) und den Verbinder (4) verbindet und der mit dem Riegel (2) drehfest verbunden ist, wobei der Verbinder (4) ein nicht-kreisrundes Loch (12) aufweist, das der Halter (3) durchgreift, wobei der Halter (3) ein Drehsicherungselement (15) aufweist, das durch Formschluss im Loch (12) des Verbinders (4) den Halter (3) in einer vorgesehenen Winkelstellung zum Verbinder (4) hält, und wobei durch eine Bewegung des Halters (3) senkrecht zum Verbinder (4) das Drehsicherungselement (15) des Halters (3) außer Eingriff von dem nicht-kreisrunden Loch (12) des Verbinders (4) bringbar ist, so dass der Halter (3) mit dem Riegel (2) gegenüber dem Verbinder (4) drehbar ist, **dadurch gekennzeichnet, dass** der Halter (3) ein Widerlager (17) aufweist, das sich lösbar am Verbinder (4) abstützt und das Drehsicherungselement (15) in drehfestem Eingriff in dem nicht-kreisförmigen Loch (12) des Verbinders (4) hält.

2. Verbindungsbaugruppe nach Anspruch 1, **dadurch gekennzeichnet, dass** eine Bewegung des Halters (3) senkrecht zum Verbinder (4), die den Riegel (2) vom Verbinder (4) entfernt, das Drehsicherungselement (15) des Halters (3) außer Eingriff von dem nicht-kreisrunden Loch (12) des Verbinders (4) bringt.

3. Verbindungsbaugruppe nach Anspruch 1 oder 2, **dadurch gekennzeichnet, dass** der Verbinder (4) ein Formschlusselement (21) aufweist, das den Verbinder (4) durch Anlage an der Montageschiene (19) in einer vorgesehenen Winkelstellung an der Montageschiene (19) halten kann.

4. Verbindungsbaugruppe nach einem der Ansprüche 1 bis 3, **dadurch gekennzeichnet, dass** das Widerlager (17) seitlich vom Halter (3) absteht und in seitlicher Richtung des Halters (3) federt und in ausgefedertem Zustand einen Lochrand des nicht-kreisrunden Lochs (12) im Verbinder (4) auf einer dem Riegel (2) abgewandten Seite übergreift.

5. Verbindungsbaugruppe nach einem der vorhergehenden Ansprüche, **dadurch gekennzeichnet, dass** der Riegel (2) ein Gewindeloch und der Halter (3) einen Durchlass für ein Schraubelement (6) aufweist, durch den das Schraubelement (6) durch das nicht-kreisrunde Loch (12) im Verbinder (4) in das Gewindeloch im Riegel (2) schraubbar ist.

6. Verbindungsbaugruppe nach einem der vorhergehenden Ansprüche, **dadurch gekennzeichnet, dass** der Halter (3) ein Federelement (8) aufweist, das den Riegel (2) in Richtung des Verbinders (4) beaufschlagt.

## Claims

1. Connection assembly for connecting two mounting rails (19), having a locking element (2) the length of which is greater than its width, having a connector (4) which is arranged to be placed onto the mounting rail (19), and having a holder (3) which connects the locking element (2) and the connector (4) and which is joined to the locking element (2) for rotation therewith, wherein the connector (4) has a non-circular hole (12) through which the holder (3) passes, wherein the holder (3) has an anti-rotation element (15) which, by interlocking engagement in the hole (12) of the connector (4), holds the holder (3) in an intended angled position relative to the connector (4), and wherein by movement of the holder (3) perpendicularly to the connector (4) the anti-rotation element (15) of the holder (3) can be disengaged from the non-circular hole (12) of the connector (4) so that the holder (3) with the locking element (2) can be rotated relative to the connector (4), **characterised in that** the holder (3) has a counter-bearing (17) which is releasably supported against the connector (4) and holds the anti-rotation element (15), secured against rotation, in engagement in the non-circular hole (12) of the connector (4).

2. Connection assembly according to claim 1, **characterised in that** a movement of the holder (3) perpendicularly to the connector (4) that moves the locking element (2) away from the connector (4) disengages the anti-rotation element (15) of the holder (3) from the non-circular hole (12) of the connector (4).

3. Connection assembly according to claim 1 or 2, **characterised in that** the connector (4) has an interlocking element (21) which, by resting against the mounting rail (19), is able to hold the connector (4) in an intended angled position on the mounting rail (19).

4. Connection assembly according to any one of claims 1 to 3, **characterised in that** the counter-bearing (17) projects laterally from the holder (3) and is resilient in the lateral direction of the holder (3) and in the uncompressed state engages over an edge of the non-circular hole (12) in the connector (4) on a side remote from the locking element (2).

5. Connection assembly according to any one of the preceding claims, **characterised in that** the locking element (2) has a threaded hole and the holder (3) has a passageway for a screw element (6), through which passageway the screw element (6) can be screwed through the non-circular hole (12) in the connector (4) into the threaded hole in the locking element (2).

6. Connection assembly according to any one of the preceding claims, **characterised in that** the holder (3) has a spring element (8) which urges the locking element (2) in the direction of the connector (4).

## Revendications

1. Ensemble de liaison permettant de relier deux rails de montage (19), comprenant un verrou (2) dont la longueur est supérieure à sa largeur, un élément de liaison (4) qui peut être posé sur le rail de montage (19), et un support (3) qui relie le verrou (2) et l'élément de liaison (4) et qui est relié au verrou (2) de manière verrouillée en rotation, l'élément de liaison (4) présentant un trou non circulaire (12) traversé par le support (3), le support (3) présentant un élément anti-rotation (15) qui retient par complémentarité de forme dans le trou (12) de l'élément de liaison (4) le support (3) dans une position angulaire prévue par rapport à l'élément de liaison (4), et dans lequel un mouvement du support (3) verticalement par rapport à l'élément de liaison (4) permet de dégager l'élément anti-rotation (15) du support (3) du trou non circulaire (12) de l'élément de liaison (4) de sorte que le support (3) peut tourner avec le verrou (2) par rapport à l'élément de liaison (4),
**caractérisé en ce que** le support (3) présente un palier de butée (17) qui prend appui de manière amovible sur l'élément de liaison (4) et qui maintient l'élément anti-rotation (15) en prise verrouillée en rotation dans le trou non circulaire (12) de l'élément de liaison (4).

2. Ensemble de liaison selon la revendication 1, **caractérisé en ce qu'**un mouvement du support (3) verticalement par rapport à l'élément de liaison (4), qui écarte le verrou (2) de l'élément de liaison (4), dégage l'élément anti-rotation (15) du support (3) hors du trou non circulaire (12) de l'élément de liaison (4).

3. Ensemble de liaison selon la revendication 1 ou 2, **caractérisé en ce que** l'élément de liaison (4) présente un élément à complémentarité de forme (21) qui peut maintenir l'élément de liaison (4) dans une position angulaire prévue sur le rail de montage (19) par application contre le rail de montage (19).

4. Ensemble de liaison selon l'une quelconque des revendications 1 à 3, **caractérisé en ce que** le palier de butée (17) fait saillie latéralement du support (3) et fait ressort dans la direction latérale du support (3), et à l'état détendu, dépasse d'un bord de trou du trou non circulaire (12) dans l'élément de liaison (4) sur un côté détourné du verrou (2).

5. Ensemble de liaison selon l'une quelconque des revendications précédentes, **caractérisé en ce que** le verrou (2) présente un trou taraudé, et le support (3) présente un passage pour un élément fileté (6) par lequel l'élément fileté (6) peut être vissé à travers le trou non circulaire (12) dans l'élément de liaison (4) dans le trou taraudé dans le verrou (2).

6. Ensemble de liaison selon l'une quelconque des revendications précédentes, **caractérisé en ce que** le support (3) présente un élément faisant ressort (8) qui sollicite le verrou (2) en direction de l'élément de liaison (4).
